# EUROPÄISCHE PATENTSCHRIFT

(11) **EP 1 058 101 B1**
(45) Veröffentlichungstag und Bekanntmachung des Hinweises auf die Patenterteilung: **23.11.2005**
(21) Anmeldenummer: 00116086.0
(22) Anmeldetag: 06.09.1994
(51) Int. Cl.: G01J 3/36

(54) **Auswahl von Spektralbereichen durch eine Spiegelblende**
Selection of spectral regions with a mirror stop
Sélection de zones spectrales par un diaphragme réfléchissant

(30) Priorität: 08.09.1993 DE 4330347
(43) Veröffentlichungstag der Anmeldung: 06.12.2000
(62) Teilanmeldung aus: 94925347.0
(73) Patentinhaber: Leica Microsystems CMS GmbH, 35578 Wetzlar (DE)
(72) Erfinder: Engelhardt, Johann, Dr., 76669 Schönborn (DE)
(74) Vertreter: Naumann, Ulrich

(56) Entgegenhaltungen:
- EP-A- 0 535 753
- WO-A-92/01966
- DE-A- 3 401 475
- US-A- 3 822 098
- US-A- 4 519 707
- US-A- 4 930 868
- BUSCH ET AL.: "Multielement detection systems for spectrochemical analysis" XP001023096 * Seite 193 - Seite 194 *
- PATENT ABSTRACTS OF JAPAN vol. 016, no. 319 (P-1385), 13. Juli 1992 (1992-07-13) & JP 04 093915 A (NIKON CORP), 26. März 1992 (1992-03-26)
- PATENT ABSTRACTS OF JAPAN vol. 010, no. 154 (P-463), 4. Juni 1986 (1986-06-04) & JP 61 007426 A (SHIMAZU SEISAKUSHO KK), 14. Januar 1986 (1986-01-14)

## Beschreibung

Die Erfindung betrifft Vorrichtungen zur Selektion und Detektion von Spektralbereichen eines Lichtstrahls, mit einer Selektionseinrichtung und einer Detektionseinrichtung, wobei die Selektionseinrichtung Mittel zur spektralen Zerlegung des Lichtstrahls und Mittel zum Ausblenden von Spektralbereichen und die Detektionseinrichtung im Strahlengang der ausgeblendeten Spektralbereiche angeordnete Detektoren umfaßt.

Aus der US 4,519,707 ist eine Vorrichtung zur Selektion und Detektion mindestens zweier Spektralbereiche eines Lichtstrahls bekannt, wobei diese Vorrichtung eine Selektionseinrichtung und eine Detektionseinrichtung umfaßt. Die bekannte Einrichtung zur Selektion der Spektralbereiche umfaßt wiederum Mittel zur spektralen Zerlegung des Lichtstrahls, nämlich in einer Ausführungsform ein Prisma und in einer anderen Ausführungsform ein lichtbrechendes Element mit verspiegelter Oberfläche und einem Beugungsgitter, wobei es sich hier im Konkreten um ein Reflexionsgitter handelt. Einzelne Anteile des spektral zerlegten Lichtstrahls werden in Lichtleiter eingekoppelt, die das Licht jeweils einem Detektor zuführen.

Aus der JP 61007426 ist eine optische Anordnung bekannt, wonach ein Teil eines Lichtstrahls bzw. des Spektrums detektiert und der restliche Teil reflektiert wird. Eine Detektion verschiedener Spektralbereiche ist hierbei nicht vorgesehen.

Aus der Literaturstelle "Proceedings of Scanning, Vol. 13, Supplement I, 1991, Seiten I-76 und I-77" ist ein konfokales Fluoreszenzmikroskop bekannt, mit dem sich der Spektralbereich eines Farbstoffes detektieren läßt. Ein von einem Laser erzeugter Lichtstrahl wird mit Hilfe optischer Bausteine zu einem zu mikroskopierenden Objekt geführt und von diesem reflektiert bzw. regt dort Fluoreszenzstoffe an. Der Reflexions- oder Fluoreszenzlichtstrahl wird mittels eines Strahlteilers ausgekoppelt und über ein optisches Filter einem Detektor zugeleitet. Das Filter erfüllt die Aufgabe, den Spektralbereich des Farbstoffes auszublenden. Ist der relevante Farbstoff in dem zu mikroskopierenden Objekt enthalten, so wird dieser aufgrund der hohen Intensität von dem Detektor erkannt. Folglich ist es auf diese Weise bei einer bspw. biomedizinischen Anwendung möglich, eingefärbte Zellen bzw. Zellstrukturen in einem Objekt nachzuweisen.

Auch ist es bereits bekannt, die zuvor beschriebene Mikroskopiertechnik in erweitertem Umfange anzuwenden. So werden bspw. unterschiedliche Zellbestandteile gleichzeitig mit zwei oder mehreren Farbstoffen gefärbt, um die räumliche Korrelation der Zellbestandteile feststellen bzw. untersuchen zu können. Im Rahmen dieser Anwendung ist es jedoch erforderlich, die unterschiedlichen Spektralbereiche der jeweiligen Farbstoffe aus dem insgesamt reflektierten Lichtstrahl auszublenden. Dazu werden bislang Strahlteiler und optische Filter verwendet, die auf den jeweiligen Spektralbereich exakt abgestimmt sind. Jeder ausgeblendete Lichtstrahl wird dann in für sich bekannter Weise einem eigens dafür vorgesehenen Detektor zugeführt.

Die zuvor genannte, zur Selektion und Detektion mindestens zweier Spektralbereiche eines Lichtstrahls dienende Vorrichtung, von der die hier vorliegende Erfindung ausgeht, hat den ganz erheblichen Nachteil, daß für jeden Farbstoff ein besonderes Filter erforderlich ist. Insbesondere im Hinblick auf die Möglichkeit der Detektion verschiedener Farbstoffe bzw. Farbstoffkombinationen hat dies zur Folge, daß eine Vielzahl von Filtern - systembedingt - bereitgestellt sein muß. Ein weiterer Nachteil der bekannten Vorrichtung ist darin zu sehen, daß die Intensität des von dem Objekt reflektierten Lichtstrahls durch die Filter verringert wird. Dies hat wiederum zur Folge, daß für eine zuverlässige Selektion und Detektion von Spektralbereichen an die Detektoren erhöhte optische und ggf. elektronische Anforderungen gestellt werden müssen.

Der Erfindung liegt daher die Aufgabe zugrunde, eine gattungsgemäße Vorrichtung zur Selektion und Detektion von Spektralbereichen eines Lichtstrahls derart auszugestalten und weiterzubilden, daß sie sich im Strahlengang eines konfokalen Fluoreszenzmikroskops verwenden läßt. Bei einfachster Konstruktion soll eine zuverlässige Selektion und Detektion von unterschiedlichen Spektralbereichen auch bei schwacher Fluoreszenzausbeute realisierbar sein. Der Detektionsbereich soll spektral variabel einstellbar sein, wobei eine lückenlose Detektion des gesamten Spektralbereichs - simultan - möglich sein soll.

Die erfindungsgemäße Vorrichtung zur Selektion und Detektion mindestens zweier Spektralbereiche eines Lichtstrahls löst die voranstehende Aufgabe durch die Merkmale des Patentanspruches 1. Danach ist eine Vorrichtung der in Rede stehenden Art derart ausgebildet, daß die Mittel zum Ausblenden von Spektralbereichen zur gleichzeitigen Reflexion zumindest eines Teils des nicht ausgeblendeten Spektralbereichs dienen, wobei im Strahlengang des reflektierten Spektralbereichs einer der Detektoren angeordnet ist und daß mehrere Spektralbereiche ausblendende und reflektierende Mittel sowie Detektoren kaskadiert zueinander angeordnet sind, so daß der jeweils ausgeblendete Spektralbereich detektiert und der jeweils reflektierte Spektralbereich ggf. abermals ausgeblendet und ebenfalls detektiert wird.

Des weiteren wird die voranstehende Aufgabe durch die Merkmale des nebengeordneten Patnetanspruchs 2 gelöst. Danach ist eine gattungsbildende Vorrichtung dadurch gekennzeichnet, daß die Mittel einerseits zum Ausblenden eines Spektralbereichs und andererseits zur Reflexion zumindest eines Teils des nicht ausgeblendeten Spektralbereichs als Spalt- bzw. Spiegelblende ausgeführt sind, die auf mindestens einer ihrer dem einfallenden Licht zugewandten Oberfläche eine vorzugsweise total reflektierende Beschichtung aufweist und daß der Spalt und/oder die reflektierende Fläche bzw. die reflektierenden Flächen der Blende in seiner bzw. ihrer Position und/oder Dimension und/oder Winkelstellung veränderbar ist bzw. sind.

In erfindungsgemäßer Weise wird aus dem spektral zerlegten Lichtstrahl ein erster Spektralbereich ausgeblendet. Der nicht ausgeblendete Spektralbereich wird - gleichzeitig - zumindest zum Teil reflektiert, wobei sowohl der ausgeblendete erste Spektralbereich als auch der hier reflektierte Spektralbereich mittels jeweils eines Detektors detektiert wird, und zwar durch Anordnung der Detektoren im jeweiligen Strahlengang. In erfindungsgemäßer Weise ist demnach erkannt worden, daß die Kombination von Ausblenden eines ersten Spektralbereichs und Reflektieren des nicht ausgeblendeten Spektralbereichs zu einer scharfen Trennung und somit einzelnen Detektion der so voneinander getrennten Spektralbereiche führt. Auf die jeweiligen Spektralbereiche abgestimmte Filter sind somit nicht erforderlich.

Wie bereits zuvor erwähnt, wird aus dem spektral zerlegten Lichtstrahl ein erster Spektralbereich ausgeblendet und der nicht ausgeblendete Spektralbereich wird reflektiert. Die zum Ausblenden dienenden Mittel sind dabei derart ausgelegt, daß der ausgeblendete erste Spektralbereich exakt dem hier zu detektierenden Spektralbereich entspricht. Gleiches gilt für den reflektierten Spektralbereich, der durch besondere Ausgestaltung der Reflexionsfläche definierbar ist. Dieser reflektierte Spektralbereich kann im Rahmen einer besonders vorteilhaften Ausgestaltung durch im Strahlengang des reflektierten Spektralbereichs angeordnete Mittel im Umfange eines zweiten - definierten - Spektralbereichs ausgeblendet werden. Der zweite Detektor wäre dann im Strahlengang des ausgeblendeten zweiten Spektralbereichs angeordnet, wobei auch hier wieder eine Selektion - durch den zweiten Detektor selbst - stattfinden könnte.

Sofern eine Selektion und Detektion weiterer Spektralbereiche erforderlich ist, könnten die Mittel zum Ausblenden des zweiten Spektralbereichs - wie im Falle der Mittel zum Ausblenden des ersten Spektralbereichs - Vorkehrungen zur Reflexion zumindest eines Teils des hier nicht ausgeblendeten Spektralbereichs umfassen. Auch hier wäre der zweite Detektor im Strahlengang des ausgeblendeten zweiten Spektralbereichs angeordnet. Im Strahlengang des nunmehr weiter reflektierten Spektralbereichs wäre dann ein dritter Detektor anzuordnen, so daß insgesamt drei Spektralbereiche detektierbar sind. Auch im Strahlengang des weiter reflektierten Spektralbereichs könnten Mittel zum Ausblenden des dritten Spektralbereichs vorgesehen sein, so daß dann der dritte Detektor im Strahlengang des ausgeblendeten dritten Spektralbereichs angeordnet ist. Die zuvor genannte Anordnung, nämlich die Vorkehrung mehrerer Spektralbereiche ausblendenden und reflektierenden Mittel sowie Detektoren, könnte auch in kaskadierter Form kombiniert sein, so daß der jeweils ausgeblendete Spektralbereich detektiert und der jeweils reflektierte Spektralbereich ggf. abermals ausgeblendet und ebenfalls detektiert werden kann.

Hinsichtlich einer besonders kompakten Ausgestaltung der erfindungsgemäßen Vorrichtung ist es von besonderem Vorteil, wenn die zum Ausblenden und ggf. zur Reflexion dienenden Mittel und der jeweils dazugehörende Detektor als integrale Baugruppe ausgeführt sind. Zur Kaskadierung wären hier entsprechende Baugruppen zu kombinieren, die lediglich hinsichtlich ihrer Anordnung und Dimensionierung aufeinander abzustimmen sind.

Hinsichtlich einer konkreten Ausgestaltung der erfindungsgemäßen Vorrichtung ist es im Hinblick auf eine einfache Konstruktion von Vorteil, wenn die Mittel zur spektralen Zerlegung des Lichtstrahls als Prisma ausgeführt sind. Ebenso könnte es sich hierbei um ein optisches Gitter oder gar um ein Hologramm handeln. Wesentlich ist jedenfalls, daß eine spektrale Zerlegung des einfallenden Lichtstrahls stattfindet, so daß ein divergierender Lichtstrahl zur Verfügung steht.

Zur Beeinflussung der zu selektierenden und schließlich zu detektierenden Spektralbereiche könnte das Prisma bzw. das Gitter oder das Hologramm um eine vorzugsweise orthogonal zum einfallenden Lichtstrahl verlaufende Achse schwenkbar ausgeführt sein. Insoweit ließe sich der Spektralbereich bei feststehenden Mitteln zum Ausblenden einfachst beeinflussen.

Die Mittel zum Ausblenden eines Spektralbereichs könnten als Blende, vorzugsweise als Spaltblende, ausgeführt sein. Handelt es sich dabei um Mittel einerseits zum Ausblenden eines Spektralbereichs und andererseits zur Reflexion zumindest eines Teils des nicht ausgeblendeten Spektralbereichs, so könnten diese als Spiegelblende ausgeführt sein, die auf mindestens einer ihrer dem einfallenden Licht zugewandten Oberflächen eine vorzugsweise total reflektierende Beschichtung bzw. einen Spiegel aufweist. Sowohl der Spalt der Spaltblende als auch die reflektierende Fläche bzw. die reflektierenden Flächen könnten in ihrer Position und/oder Winkelstellung veränderbar sein, wozu diese Veränderungen vorzgusweise über einen Motorantrieb kontinuierlich, d.h. stufenlos, erfolgen könnten. In Ergänzung zu der Verstellbarkeit des zuvor beispielhaft genannten Prisma läßt sich auch hier der zu selektierende Spektralbereich einstellen bzw. vorgeben, wobei durch kombinierte Einstellbarkeit einerseits der Mittel zur spektralen Zerlegung und andererseits der Mittel zum Ausblenden und Reflektieren eine besonders exakte Vorgabe bzw. Einstellung des interessierenden Spektralbereichs stattfinden kann.

Zur Vermeidung von Beeinflussungen durch Streulicht bzw. zur Unterdrückung des primären Anregungslichtes könnten die Mittel zum Ausblenden eines Spektralbereichs und ggf. zur Reflexion zumindest eines Teils des nicht ausgeblendeten Spektralbereichs in vorteilhafter Weise weitere Mittel zum Ausblenden von Spektrallinien aufweisen. Dabei könnte es sich vorzugsweise um sog. Lichtfallen handeln. Diese Mittel zum Ausblenden von Spektrallinien könnten als nicht reflektierende Bereiche bzw. lichtabsorbierende Bereiche ausgeführt sein, wobei es sich hier schlicht und einfach um Sacklöcher handeln könnte, worin sich das einfallende Licht nach Mehrfachreflexion "totläuft". Diese zum Ausblenden von Spektrallinien dienenden besonderen Mittel könnten wiederum als integrale Bestandteile der zum Ausblenden der zu detektierenden Spektralbereiche dienenden Mittel ausgeführt sein.

Des weiteren wäre es auch denkbar, die als Lichtfallen dienenden, nicht reflektierenden Bereiche in ihrer Position und/oder Winkelstellung veränderbar zu gestalten, so daß auch insoweit eine exakte Einstellbarkeit gegeben ist. Die Veränderung könnte vorzugsweise über einen Motorantrieb kontinuierlich erfolgen, so daß bestimmte Streulichtzustände kompensierbar sind.

Auch wäre es denkbar, in den unterschiedlichen Strahlengängen der ausgeblendeten und/oder reflektierten Spektralbereiche grundsätzlich Mittel zur Reduktion von Streulicht anzuordnen, so daß durch Streulicht bedingte Störeinflüsse weitgehendst vermieden sind.

Hinsichtlich einer exakten Abstimmung der erfindungsgemäßen Vorrichtung ist es von Vorteil, wenn die Mittel zur spektralen Zerlegung des Lichtstrahls und die Mittel zum Ausblenden eines Spektralbereichs und ggf. zur Reflexion zumindest eines Teils des nicht ausgeblendeten Spektralbereichs in ihrer Winkelstellung und/oder Position relativ zueinander veränderbar sind. Insoweit könnte zur Vorgabe des zu detektierenden Spektralbereichs eine exakte Abstimmung stattfinden. Auch könnten die verschiedenen Mittel zum Ausblenden eines Spektralbereichs und ggf. zur Reflexion zumindest eines Teils des nicht ausgeblendeten Spektralbereichs unter- bzw. zueinander in ihrer Winkelstellung und/oder Position relativ zueinander veränderbar sein. Folglich wäre insoweit eine exakte Einstellung der unterschiedlichen "Ausblendungsstufen" möglich. Schließlich könnten die Detektoren in ihrer Relativlage zu den Mitteln zum Ausblenden eines Spektralbereichs und ggf. zur Reflexion zumindest eines Teils des nicht ausgeblendeten Spektralbereichs in ihrer Winkelstellung und/oder Position zueinander veränderbar sein. Auch insoweit ließen sich die ausgeblendeten und zu detektierenden Spektralbereiche abermals beeinflussen bzw. vorgeben, wobei sämtliche zuvor genannten Veränderungen von Winkelstellungen und/oder Positionen vorzugsweise über einen Motorantrieb erfolgen können.

Schließlich sei ganz besonders hervorgehoben, daß die zuvor erörterte erfindungsgemäße Vorrichtung im Strahlengang eines konfokalen Fluoreszenzmikroskops einsetzbar ist, wobei die Vorrichtung dem eigentlich Fluoreszenzmikroskop zur Aufnahme des dort reflektierten Lichtstrahls bzw. Fluoreszenzlichtstrahls nachgeschaltet ist.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung dreier Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigt
- Fig. 1: in einem schematischen Blockschaltbild ein konfokales Fluoreszenzmikroskop mit einer erfindungsgemäßen Vorrichtung,
- Fig. 2: in einem Diagramm ein über der Wellenlänge und der Intensität eines Lichtstrahls aufgetragenes Koordinatensystem, in dem die Spektren zweier Farbstoffe dargestellt sind,
- Fig. 3: in einem schematischen Blockschaltbild ein erstes Ausführungsbeispiel einer erfindungsgemäßen Vorrichtung zur Selektion und Dektektion zweier Spektralbereiche eines Lichtstrahls,
- Fig. 4: in einem schematischen Blockschaltbild ein zweites Ausführungsbeispiel einer erfindungsgemäßen Vorrichtung zur Selektion und Detektion dreier Spektralbereiche eines Lichtstrahls und
- Fig. 5: in einem schematischen Blockschaltbild ein drittes Ausführungsbeispiel einer erfindungsgemäßen Vorrichtung, jedoch mit einer verstellbaren Selektionseinrichtung.

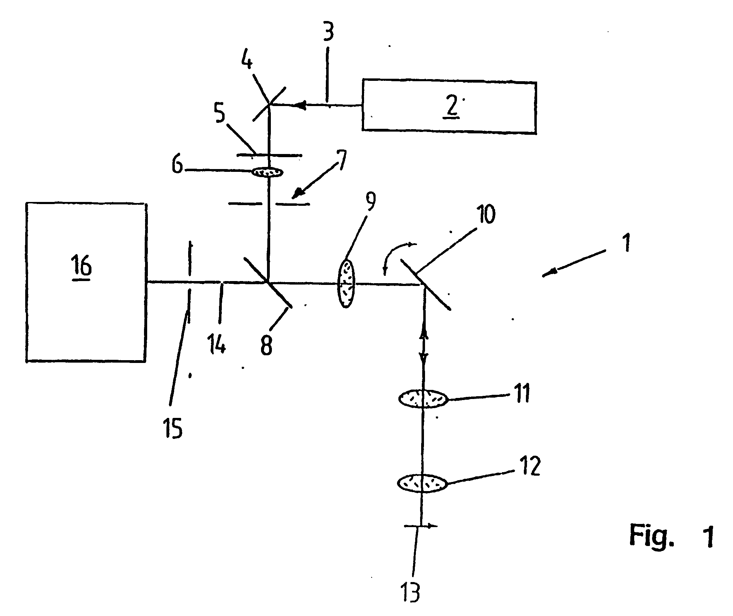

Fig. 1 zeigt in einem schematischen Blockschaltbild den grundsätzlichen Aufbau eines konfokalen Fluoreszenzmikroskops 1, bei dem von einem Laser 2 ein Lichtstrahl 3 erzeugt wird. Der Lichtstrahl 3 wird über einen Umlenkspiegel 4, einen Anregungsfilter 5, eine Linse 6 und eine Blende 7 einem Strahlteiler 8 zugeführt. Von dem Strahlteiler 8 wird der Lichtstrahl 3 um etwa 90 umgelenkt und gelangt über eine weitere Linse 9, einen schwenkbaren Scan-Spiegel 10, ein Okular 11 und ein Objektiv 12 zu dem zu mikroskopierenden Objekt 13. Von dem Objekt 13 wird zumindest ein Teil des dort einfallenden Lichtstrahls 3 reflektiert. Der reflektierte Lichtstrahl 14 durchläuft das Objektiv 12, das Okular 11, den Scan-Spiegel 10 und die Linse 9 zurück zu dem Strahlteiler 8. Dort wird der reflektierte Lichtstrahl 14 geradlinig durchgelassen und gelangt über eine Blende 15 zu der erfindungsgemäßen Vorrichtung 16, in der der Lichtstrahl 14 optisch weiterverarbeitet wird.

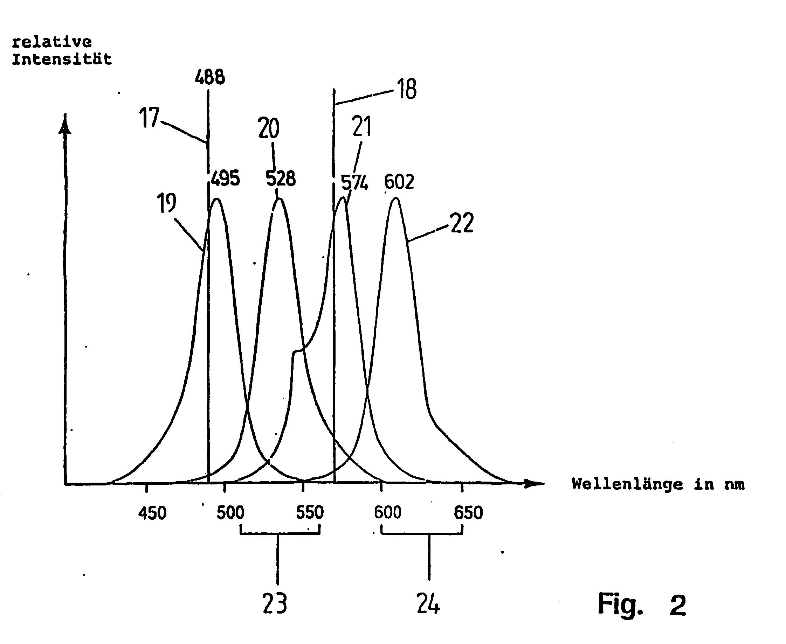

Fig. 2 zeigt die Spektren zweier Farbstoffe in einem Koordinatensystem. Auf der Abszisse ist die Wellenlänge des Lichts in Nanometer (nm) und auf der Ordinate ist die relative Intensität des Lichts abgetragen.

Handelt es sich bei dem Laser 2 bspw. um einen Argon-Krypton-Mischgaslaser, so wird von diesem insbesondere eine Argon-Linie 17 bei 488 nm und eine Krypton-Linie 18 beim 568 nm ausgestrahlt. Sind des weiteren Bestandteile des Objekts 13 selektiv mit dem Farbstoff FITC (Fluoresceinisothiocyanat) und dem Farbstoff Lissamin-Rhodamin eingefärbt, so werden der Farbstoff FITC von der Argon-Linie 17 und der Farbstoff Lissamin-Rhodamin von der Krypton-Linie 18 angeregt. Diese Anregungen bewirken im Zusammenhang mit dem Farbstoff FITC eine Absorption 19 im Bereich von etwa 495 nm und eine Emission 20 im Bereich von 528 nm. Bei dem Farbstoff Lissamin-Rhodamin erfolgt eine Absorption 21 im Bereich von etwa 574 nm und eine Emission 22 im Bereich von etwa 602 nm.

Sollen die unterschiedlich eingefärbten Bestandteile des Objekts 13 beim Mikroskopieren erkannt werden, so ist es erforderlich, die Emissionen 20 und 22 der Farbstoffe FITC und Lissamin-Rhodamin zu detektieren. Folglich sind der FITC-Spektralbereich 23 und der Lissamin-Rhodamin-Spektralbereich 24 der Emissionen 20 und 22 zu detektieren. Dies erfolgt bei dem in Fig. 1 dargestellten Fluoreszenzmikroskop 1 mit Hilfe der erfindungsgemäßen Vorrichtung 16 zur Selektion und Detektion unterschiedlicher Spektralbereiche.

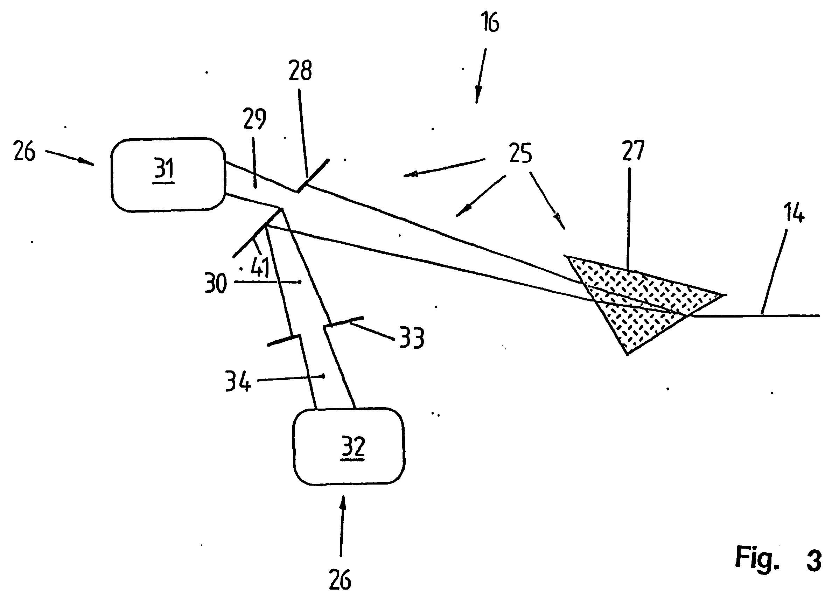

Fig. 3 zeigt nun ein erstes Ausführungsbeispiel einer erfindungsgemäßen Vorrichtung 16 zur Detektion zweier Spektralbereiche eines Lichtstrahls 14, mit einer Selektionseinrichtung 25 und einer Detektionseinrichtung 26.

In erfindungsgemäßer Weise weist die Selektionseinrichtung 25 Mittel 27 zur spektralen Zerlegung des Lichtstrahls 14 und Mittel 28 einerseits zum Ausblenden eines ersten Spektralbereichs 29 und andererseits zur Reflexion zumindest eines Teils 30 des nicht ausgeblendeten Spektralbereichs und die Detektionseinrichtung 26 einen im Strahlengang des ausgeblendeten ersten Spektralbereichs 29 angeordneten ersten Detektor 31 und einen im Strahlengang des reflektierten Spektralbereichs angeordneten zweiten Detektor 32 auf.

Fig. 3 zeigt des weiteren deutlich, daß die Selektionseinrichtung 25 im Strahlengang des reflektierten Spektralbereichs 30 angeordnete Mittel 33 zum Ausblenden eines zweiten Spektralbereichs 34 umfaßt und daß der zweite Detektor 32 im Strahlengang des ausgeblendeten zweiten Spektralbereichs 34 angeordnet ist.

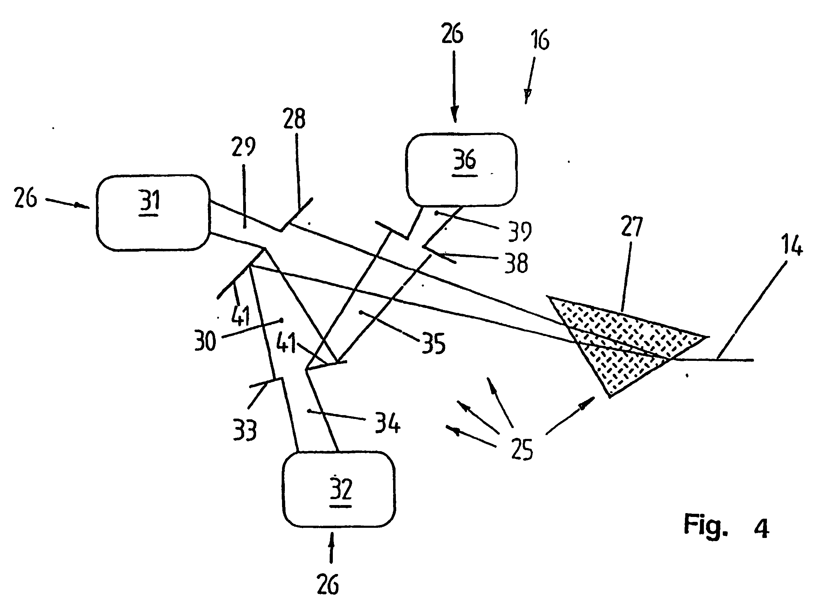

Bei dem in Fig. 4 dargestellten zweiten Ausführungsbeispiel einer erfindungsgemäßen Vorrichtung 16 weist die Selektionseinrichtung 25 im Strahlengang des reflektierten Spektralbereichs 30 angeordnete Mittel 33 einerseits zum Ausblenden eines zweiten Spektralbereichs 34 und andererseits zur weiteren Reflexion zumindest eines Teils 35 des hier nicht ausgeblendeten Spektralbereichs auf. Der zweite Detektor 32 ist im Strahlengang des ausgeblendeten zweiten Spektralbereichs 34 und ein dritter Detektor 36 ist im Strahlengang des weiter reflektierten Spektralbereichs 35 angeordnet.

Die Selektionseinrichtung 25 des in Fig. 4 dargestellten Ausführungsbeispiels der erfindungsgemäßen Vorrichtung 16 umfaßt des weiteren im Strahlengang des weiter reflektierten Spektralbereichs 35 angeordnete Mittel 38 zum Ausblenden eines dritten Spektralbereichs 39, wobei der dritte Detektor 36 im Strahlengang des ausgeblendeten dritten Spektralbereichs 39 angeordnet ist. Folglich werden mit dem hier dargestellten Ausführungsbeispiel insgesamt drei Spektralbereiche 29, 34 und 39 selektiert und detektiert. Entsprechend den Ausführungen in der allgemeinen Beschreibung ist eine Kaskadierung mehrerer Spektralbereiche ausblendenden und reflektierenden Mittel sowie Detektoren möglich, so daß ohne weiteres auch mehr als drei Spektralbereiche gleichzeitig selektierbar und detektierbar sind.

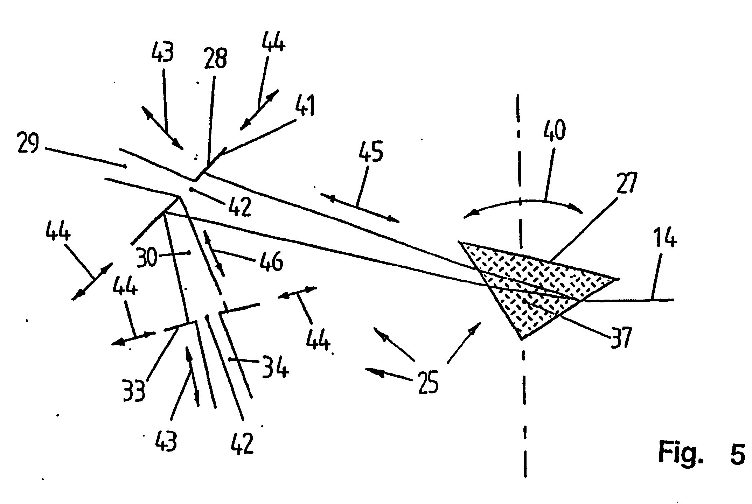

Bei den in den Fig. 3, 4 und 5 dargestellten Ausführungsbeispielen sind die Mittel 27 zur spektralen Zerlegung des Lichtstrahls 14 als Prisma ausgeführt, wobei das Prisma bei dem in Fig. 5 dargestellten dritten Ausführungsbeispiel um eine orthogonal zum einfallenden Lichtstrahl 14 und zur Zeichenebene verlaufende Achse 37 gemäß Pfeil 40 in Fig. 5 schwenkbar ist. Die Mittel 28, 33 und 38 sind jeweils als Spaltblende ausgeführt, wobei zur Reflexion zumindest eines Teils des nicht ausgeblendeten Spektralbereichs auf einer dem einfallenden Licht zugewandten Oberfläche jeweils eine total reflektierende Beschichtung 41 vorgesehen ist.

Gemäß dem in Fig. 5 dargestellten dritten Ausführungsbeispiel ist der Spalt 42 der Spaltblende sowohl in seiner Position als auch in seiner Dimension gemäß den Pfeilen 43, 44 veränderbar, wodurch sich vorgebbare bzw. einstellbare Spektralbereiche ausblenden lassen. Ebenso sind die die reflektierende Beschichtung 41 tragenden Flächen sowohl in ihrer Position als auch in ihrer Winkelstellung veränderbar, wodurch der reflektierte Spektralbereich ebenfalls beeinflußbar ist.

Hinsichtlich der Vorkehrung lichtabsorbierender Bereiche bzw. von Lichtfallen sowie hinsichtlich der Vermeidung bzw. Reduktion von Streulicht wird zur Vermeidung von Wiederholungen auf den allgemeinen Teil der Beschreibung verwiesen.

Hinsichtlich der in Fig. 5 dargestellten Ausführungsform wird noch ergänzend darauf hingewiesen, daß die Mittel 27 zur spektralen Zerlegung des Lichtstrahls 14 und die Mittel 28 zum Ausblenden eines ersten Spektralbereichs 29 bzw. zur Reflexion zumindest eines Teils 30 des nicht ausgeblendeten Spektralbereichs in ihrer Winkelstellung und Position relativ zueinander veränderbar sind. Dies ist durch Pfeil 45 lediglich angedeutet. Gleiches gilt für die Mittel 28 und 33 zum Ausblenden eines Spektralbereichs 29 bzw. 34, was durch Pfeil 46 angedeutet ist. Schließlich lassen sich auch die in Fig. 5 nicht gezeigten Detektoren in ihrer Relativlage zu den Mitteln 28, 33 in ihrer Winkelstellung und Position verändern.

Mit Nachdruck wird nochmals darauf hingewiesen, daß die in den Fig. 3, 4 und 5 dargestellte und zuvor erläuterte erfindungsgemäße Vorrichtung im Strahlengang eines in Fig. 1 schematisch dargestellten Fluoreszenzmikroskops 1 verwendet bzw. angeordnet sein kann.

## Patentansprüche

1. Vorrichtung zur Selektion und Detektion von Spektralbereichen eines Lichtstrahls (14), mit einer Selektionseinrichtung (25) und einer Detektionseinrichtung (26), wobei die Selektionseinrichtung (25) Mittel (27) zur spektralen Zeriegung des Lichtstrahls (14) und Mittel (28, 33, 38) zum Ausblenden der Spektralbereiche (29, 34, 39) und die Detektionseinrichtung (26) im Strahlengang der ausgeblendeten Spektralbereiche (29, 34, 39) angeordnete Detektoren (31, 32, 36) umfaßt,
**dadurch gekennzeichnet, daß** die Mittel (28,33,38) zum Ausblenden der Spektralbereiche (29, 34, 39) zur gleichzeitigen Reflexion zumindest eines Teils (30, 35) des nicht ausgeblendeten Spektralbereichs dienen, wobei im Strahlengang des reflektierten Spektralbereichs (30, 35) einer der Detektoren (32, 36) angeordnet ist und daß mehrere Spektralbereiche (29, 30, 34, 35, 39) ausblendende und reflektierende Mittel (28, 33, 38) sowie Detektoren (31, 32, 36) kaskadiert zueinander angeordnet sind, so daß der jeweils ausgeblendete Spektralbereich (29, 34, 39) detektiert und der jeweils reflektierte Spektralbereich (30, 35) ggf. abermals ausgeblendet und ebenfalls detektiert wird.

2. Vorrichtung zur Selektion und Detektion von Spektralbereichen eines Lichtstrahls (14), mit einer Selektionseinrichtung (25) und einer Detektionseinrichtung (26), wobei die Selektionseinrichtung (25) Mittel (27) zur spektralen Zerlegung des Lichtstrahls (14) und Mittel (28, 33, 38) zum Ausblenden der Spektralbereiche (29, 34, 39) und die Detektionseinrichtung (26) im Strahlengang der ausgeblendeten Spektralbereiche (29, 34, 39) angeordnete Detektoren (31, 32, 36) umfaßt,
**dadurch gekennzeichnet, daß** die Mittel (28, 33, 38) zum Ausblenden eines Spektralbereichs (29) ggf. als Spaltblende und dass Mittel (28, 33, 38) einerseits zum Ausblenden eines Spektralbereichs (29) und andererseits zur Reflexion zumindest eines Teils (30) des nicht ausgeblendeten Spektralbereichs als Spiegelblende ausgeführt sind, die auf mindestens einer ihrer dem einfallenden Licht zugewandten Oberfläche eine vorzugsweise total reflektierende Beschichtung (41) aufweist und daß der Spalt (42) und/oder die reflektierende Fläche bzw. die reflektierenden Flächen der Blende in seiner bzw. ihrer Position und/oder Dimension und/oder Winkelstellung veränderbar ist bzw. sind.

3. Vorrichtung nach Anspruch 2, **dadurch gekennzeichnet, daß** die Selektionseinrichtung (25) im Strahlengang des reflektierten Spektralbereichs (30) angeordnete Mittel (33) zum Ausblenden eines zweiten Spektralbereichs (34) umfaßt und daß der zweite Detektor (32) im Strahlengang des ausgeblendeten zweiten Spektralbereichs (34) angeordnet ist.

4. Vorrichtung nach Anspruch 2, **dadurch gekennzeichnet, daß** die Selektionseinrichtung (25) im Strahlengang des reflektierten Spektralbereichs (30) angeordnete Mittel (33) einerseits zum Ausblenden eines zweiten Spektralbereichs (34) und andererseits zur weiteren Reflexion zumindest eines Teils (35) des hier nicht ausgeblendeten Spektralbereichs umfaßt, daß der zweite Detektor (32) im Strahlengang des ausgeblendeten zweiten Spektralbereichs (34) angeordnet ist und daß der dritte Detektor (36) im Strahlengang des weiter reflektierten Spektralbereichs (35) angeordnet ist.

5. Vorrichtung nach einem der Ansprüche 2 bis 4, **dadurch gekennzeichnet, daß** die Selektionseinrichtung (25) im Strahlengang des weiter reflektierten Spektralbereichs (35) angeordnete Mittel (38) zum Ausblenden eines dritten Spektralbereichs (39) umfaßt und daß der dritte Detektor (36) im Strahlengang des ausgeblendeten dritten Spektralbereichs (39) angeordnet ist.

6. Vorrichtung nach einem der Ansprüche 1 bis 5, **dadurch gekennzeichnet, daß** die zum Ausblenden und ggf. zur Reflexion dienenden Mittel (28, 33, 38) und der jeweils dazugehörende Detektor (31, 32, 36) als integrale Baugruppe ausgeführt sind.

7. Vorrichtung nach einem der Ansprüche 1 bis 6, **dadurch gekennzeichnet, daß** die Mittel (27) zur spektralen Zerlegung des Lichtstrahls (14) als Prisma, optisches Gitter oder Hologramm ausgeführt sind.

8. Vorrichtung nach Anspruch 7, **dadurch gekennzeichnet, daß** das Prisma, Gitter oder Hologramm um eine vorzugsweise orthogonal zum einfallenden Lichtstrahl (14) verlaufende Achse schwenkbar ist.

9. Vorrichtung nach Anspruch 1 und gegebenenfalls einem der Ansprüche 6 bis 8, **dadurch gekennzeichnet, daß** die Mittel (28, 33, 38) zum Ausblenden eines Spektralbereichs (29, 34, 39) als Blende, vorzugsweise als Spaltblende, ausgeführt sind.

10. Vorrichtung nach Anspruch 1 und gegebenenfalls einem der Ansprüche 6 bis 9, **dadurch gekennzeichnet, daß** die reflektierende Fläche bzw. die reflektierenden Flächen in ihrer Position und/oder Winkelstellung veränderbar ist bzw. sind.

11. Vorrichtung nach Anspruch 1 und gegebenenfalls einem der Ansprüche 6 bis 10, **dadurch gekennzeichnet, daß** die Veränderung kontinuierlich, vorzugsweise über einen Motorantrieb, erfolgt.

12. Vorrichtung nach einem der Ansprüche 1 bis 11, **dadurch gekennzeichnet, daß** die Mittel (28, 33, 38) zum Ausblenden eines Spektralbereichs (29, 34, 39) und ggf. zur Reflexion zumindest eines Teils (30, 35) des nicht ausgeblendeten Spektralbereichs (30, 35) weitere Mittel zum Ausblenden von Spektrallinien, insbesondere Lichtfallen, aufweisen.

13. Vorrichtung nach Anspruch 12, **dadurch gekennzeichnet, daß** die Mittel zum Ausblenden von Spektrallinien als nicht reflektierende Bereiche bzw. lichtabsorbierende Bereiche und als integrale Bestandteile der Mittel zum Ausblenden und ggf. zur Reflexion ausgeführt sind.

14. Vorrichtung nach Anspruch 13, **dadurch gekennzeichnet, daß** die nicht reflektierenden Bereiche in ihrer Position und/oder Winkelstellung veränderbar sind.

15. Vorrichtung nach Anspruch 14, **dadurch gekennzeichnet, daß** die Veränderung kontinuierlich, vorzugsweise über einen Motorantrieb, erfolgt.

16. Vorrichtung nach einem der Ansprüche 1 bis 15, **dadurch gekennzeichnet, daß** in den unterschiedlichen Strahlengängen der ausgeblendeten und/oder reflektierten Spektralbereiche (29, 34, 39 bzw. 30, 35) Mittel zur Reduktion von Streulicht angeordnet sind.

17. Vorrichtung nach einem der Ansprüche 1 bis 16, **dadurch gekennzeichnet, daß** die Mittel (27) zur spektralen Zerlegung des Lichtstrahls (14) und die Mittel (28, 33, 38) zum Ausblenden eines Spektralbereichs (29, 34, 39) und ggf. zur Reflexion zumindest eines Teils (30, 35) des nicht ausgeblendeten Spektralbereichs in ihrer Winkelstellung und/oder Position relativ zueinander veränderbar sind.

18. Vorrichtung nach einem der Ansprüche 1 bis 17, **dadurch gekennzeichnet, daß** die verschiedenen Mittel (28, 33, 38) zum Ausblenden eines Spektralbereichs (29, 34, 39) und ggf. zur Reflexion zumindest eines Teils (30, 35) des nicht ausgeblendeten Spektralbereichs in ihrer Winkelstellung und/oder Position relativ zueinander veränderbar sind.

19. Vorrichtung nach einem der Ansprüche 1 bis 18, **dadurch gekennzeichnet, daß** die Detektoren (31, 32, 36) in ihrer Relativlage zu den Mitteln (28, 33, 38) zum Ausblenden eines Spektralbereichs (29, 34, 39) und ggf. zur Reflexion zumindest eines Teils (30, 35) des nicht ausgeblendeten Spektralbereichs in ihrer Winkelstellung und/oder Position zueinander veränderbar sind.

20. Vorrichtung nach einem der Ansprüche 17 bis 19, **dadurch gekennzeichnet, daß** die Veränderung kontinuierlich, vorzugsweise über einen Motorantrieb, erfolgt.

21. Vorrichtung nach einem der Ansprüche 1 bis 20, **gekennzeichnet durch** die Verwendung im Strahlengang eines konfokalen Fluoreszenzmikroskops (1).

## Claims

1. Device for the selection and detection of spectral ranges of a light beam (14), having a selection device (25) and a detection device (26), the selection device (25) comprising means (27) for the spectral splitting of the light beam (14) and means (28, 33, 38) for filtering the spectral ranges (29, 34, 39) and the detection device (26) comprising detectors (31, 32, 36) which are arranged in the beam path of the spectral ranges (29, 34, 39) which have been filtered,
**characterised in that** the means (28, 33, 38) for filtering the spectral ranges (29, 34, 39) are used at the same time to reflect at least a portion (30, 35) of the spectral range which has not been filtered, one of the detectors (32, 36) being arranged in the beam path of the reflected spectral range (30, 35), and **in that** a plurality of means (28, 33, 38) and detectors (31, 32, 36) for filtering and reflecting spectral ranges (29, 30, 34, 35, 39) are arranged in a cascading manner relative to each other so that the spectral range (29, 34, 39) which has been filtered in each case is detected and the spectral range (30, 35) which is reflected in each case is optionally again filtered and also detected.

2. Device for the selection and detection of spectral ranges of a light beam (14), having a selection device (25) and a detection device (26), the selection device (25) comprising means (27) for the spectral splitting of the light beam (14) and means (28, 33, 38) for filtering the spectral ranges (29, 34, 39) and the detection device (26) comprising detectors (31, 32, 36) which are arranged in the beam path of the spectral ranges (29, 34, 39) which have been filtered,
**characterised in that** the means (28, 33, 38) for filtering a spectral range (29) are optionally constructed as a slitted screen, and **in that** means (28, 33, 38) for filtering a spectral range (25), on the one hand, and for reflecting at least a portion (30) of the spectral range which has not been filtered, on the other hand, are constructed as a reflective screen which has, on at least one of the surfaces thereof facing the incident light, a coating (41) which is preferably completely reflective, and **in that** the slit (42) and/or the reflective face(s) of the screen can be adjusted in terms of the position and/or dimensions and/or angular position thereof.

3. Device according to claim 2, **characterised in that** the selection device (25) comprises means (33) which are arranged in the beam path of the reflected spectral range (30) for filtering a second spectral range (34), and **in that** the second detector (32) is arranged in the beam path of the second spectral range (34) which has been filtered.

4. Device according to claim 2, **characterised in that** the selection device (25) comprises means (33) which are arranged in the beam path of the reflected spectral range (30), on the one hand, for filtering a second spectral range (34) and, on the other hand, for further reflecting at least a portion (35) of the spectral range which has not been filtered in this instance, and **in that** the second detector (32) is arranged in the beam path of the second spectral range (34) which has been filtered, and **in that** the third detector (36) is arranged in the beam path of the spectral range (35) which is further reflected.

5. Device according to any one of claims 2 to 4,
**characterised in that** the selection device (25) comprises means (38) which are arranged in the beam path of the spectral range (35) which is further reflected for filtering a third spectral range (39), and **in that** the third detector (36) is arranged in the beam path of the third spectral range (39) which has been filtered.

6. Device according to any one of claims 1 to 5,
**characterised in that** the means (28, 33, 38) which are used for filtering and optionally reflecting and the detector (31, 32, 36) which is associated therewith in each case are constructed as an integral assembly.

7. Device according to any one of claims 1 to 6,
**characterised in that** the means (27) for the spectral splitting of the light beam (14) are constructed as a prism, optical grating or hologram.

8. Device according to claim 7, **characterised in that** the prism, grating or hologram can be pivoted about an axis which preferably extends in an orthogonal manner relative to the incident light beam (14).

9. Device according to claim 1 and optionally any one of claims 6 to 8, **characterised in that** the means (28, 33, 38) for filtering a spectral range (29, 34, 39) are constructed as a screen, preferably a slitted screen.

10. Device according to claim 1 and optionally any one of claims 6 to 9, **characterised in that** the reflective face(s) can be adjusted in terms of the position and/or angular position thereof.

11. Device according to claim 1 and optionally any one of claims 6 to 10, **characterised in that** the adjustment is carried out in a continuous manner, preferably by means of a motor drive.

12. Device according to any one of claims 1 to 11,
**characterised in that** the means (28, 33, 38) for filtering a spectral range (29, 34, 39) and optionally for reflecting at least a portion (30, 35) of the spectral range (30, 35) which has not been filtered have additional means for filtering spectral lines, in particular light traps.

13. Device according to claim 12, **characterised in that** the means for filtering spectral lines are constructed as non-reflective regions or light absorbing regions and as integral component parts of the means for filtering and optionally reflecting.

14. Device according to claim 13, **characterised in that** the non-reflective regions can be adjusted in terms of the position and or angular position thereof.

15. Device according to claim 14, **characterised in that** the adjustment is carried out in a continuous manner, preferably by means of a motor drive.

16. Device according to any one of claims 1 to 15,
**characterised in that** means for reducing scattered light are arranged in the various beam paths of the spectral ranges (29, 34, 39 and 30, 35) which have been filtered and/or reflected.

17. Device according to any one of claims 1 to 16,
**characterised in that** the means (27) for the spectral splitting of the light beam (14) and the means (28, 33, 38) for filtering a spectral range (29, 34, 39) and optionally for reflecting at least a portion (30, 35) of the spectral range which has not been filtered can be adjusted in terms of the angular position and/or position thereof relative to each other.

18. Device according to any one of claims 1 to 17,
**characterised in that** the various means (28, 33, 38) for filtering a spectral range (29, 34, 39) and optionally for reflecting at least a portion (30, 35) of the spectral range which has not been filtered can be adjusted in terms of the angular position and/or position thereof relative to each other.

19. Device according to any one of claims 1 to 18,
**characterised in that** the detectors (31, 32, 36) can be adjusted in terms of their relative position to the means (28, 33, 38) for filtering a spectral range (29, 34, 39) and optionally for reflecting at least one portion (30, 35) of the spectral range which has not been filtered in terms of the angular position and/or position thereof relative to each other.

20. Device according to any one of claims 17 to 19,
**characterised in that** the adjustment is carried out in a continuous manner, preferably by means of a motor drive.

21. Device according to any one of claims 1 to 20,
**characterised by** the use of a confocal fluorescence microscope (1) in the beam path.

## Revendications

1. Dispositif pour la sélection et la détection de zones spectrales d'un rayon lumineux (14), avec un dispositif de sélection (25) et un dispositif de détection (26), le dispositif de sélection (25) comprenant des moyens (27) pour la décomposition spectrale du rayon lumineux (14) et des moyens (28, 33, 38) pour diaphragmer les zones spectrales (29, 34, 39) et le dispositif de détection (26) comprenant des détecteurs (31, 32, 36) disposés dans la marche des rayons des zones spectrales (29, 34, 39) diaphragmées,
**caractérisé par le fait que** les moyens (28, 33, 38) pour diaphragmer les zones spectrales (29, 34, 39) servent à la réflexion simultanée d'au moins une partie (30, 35) de la zone spectrale non diaphragmée, un des détecteurs (32, 36) étant disposé dans la marche des rayons de la zone spectrale (30, 35) réfléchie, et que des moyens (28, 33, 38) diaphragmant et réfléchissant plusieurs zones spectrales (29, 30, 34, 35, 39) ainsi que des détecteurs (31, 32, 36) sont disposés en cascade les uns par rapport aux autres, de telle manière que la zone spectrale (29, 34, 39) respectivement diaphragmée est détectée et que la zone spectrale (30, 35) respectivement réfléchie est le cas échéant de nouveau diaphragmée et également détectée.

2. Dispositif pour la sélection et la détection de zones spectrales d'un rayon lumineux (14), avec un dispositif de sélection (25) et un dispositif de détection (26), le dispositif de sélection (25) comprenant des moyens (27) pour la décomposition spectrale du rayon lumineux (14) et des moyens (28, 33, 38) pour diaphragmer les zones spectrales (29, 34, 39) et le dispositif de détection (26) comprenant des détecteurs (31, 32, 36) disposés dans la marche des rayons des zones spectrales (29, 34, 39) diaphragmées,
**caractérisé par le fait que** les moyens (28, 33, 38) pour diaphragmer une zone spectrale (29) sont réalisés le cas échéant sous forme d'un diaphragme à fente et que des moyens (28, 33, 38) d'une part pour diaphragmer une zone spectrale (29) et d'autre part pour réfléchir au moins une partie (30) de la zone spectrale non diaphragmée sont réalisés sous forme d'un diaphragme réfléchissant qui présente sur au moins une de ses surfaces tournée vers la lumière incidente un revêtement (41) réfléchissant, de préférence totalement, et que la fente (42) et/ou la surface réfléchissante ou respectivement les surfaces réfléchissantes du diaphragme est ou respectivement sont modifiable(s) dans sa ou respectivement leur position et/ou dimension et/ou position angulaire.

3. Dispositif selon la revendication 2,
**caractérisé par le fait que** le dispositif de sélection (25) comprend des moyens (33), disposés dans la marche des rayons de la zone spectrale (30) réfléchie, pour diaphragmer une seconde zone spectrale (34) et que le deuxième détecteur (32) est disposé dans la marche des rayons de la deuxième zone spectrale (34) diaphragmée.

4. Dispositif selon la revendication 2,
**caractérisé par le fait que** le dispositif de sélection (25) comprend des moyens (33), disposés dans la marche des rayons de la zone spectrale (30) réfléchie, d'une part pour diaphragmer une deuxième zone spectrale (34) et d'autre part pour réfléchir plus loin au moins une partie (35) de la zone spectrale non diaphragmée ici, que le deuxième détecteur (32) est disposé dans la marche des rayons de la deuxième zone spectrale (34) diaphragmée et que le troisième détecteur (36) est disposé dans la marche des rayons de la zone spectrale (35) réfléchie plus loin.

5. Dispositif selon l'une des revendications 2 à 4,
**caractérisé par le fait que** le dispositif de sélection (25) présente des moyens (38), disposés dans la marche des rayons de la zone spectrale (35) réfléchie plus loin, pour diaphragmer une troisième zone spectrale (39) et que le troisième détecteur (36) est disposé dans la marche des rayons de la troisième zone spectrale (39) diaphragmée.

6. Dispositif selon l'une des revendications 1 à 5,
**caractérisé par le fait que** les moyens (28, 33, 38) servant à diaphragmer et le cas échéant à réfléchir et le détecteur (31, 32, 36) qui en fait respectivement partie sont réalisés sous forme d'un groupe de construction d'une seule pièce.

7. Dispositif selon l'une des revendications 1 à 6,
**caractérisé par le fait que** les moyens (27) pour la décomposition spectrale du rayon lumineux (14) sont réalisés sous forme de prisme, de grille optique ou d'hologramme.

8. Dispositif selon la revendication 7,
**caractérisé par le fait que** le prisme, la grille ou l'hologramme est pivotant autour d'un axe s'étendant de préférence orthogonalement au rayon lumineux (14) incident.

9. Dispositif selon la revendication 1 et le cas échéant l'une des revendications 6 à 8,
**caractérisé par le fait que** les moyens (28, 33, 38) pour diaphragmer une zone spectrale (29, 34, 39) sont réalisés sous forme d'un diaphragme, de préférence sous forme d'un diaphragme à fente.

10. Dispositif selon la revendication 1 et le cas échéant l'une des revendications 6 à 9,
**caractérisé par le fait que** la surface réfléchissante ou respectivement les surfaces réfléchissantes est ou respectivement sont modifiable(s) dans leur position et/ou position angulaire.

11. Dispositif selon la revendication 1 et le cas échéant l'une des revendications 6 à 10,
**caractérisé par le fait que** la modification a lieu de manière continue, de préférence par l'intermédiaire d'un entraînement à moteur.

12. Dispositif selon l'une des revendications 1 à 11,
**caractérisé par le fait que** les moyens (28, 33, 38) pour diaphragmer une zone spectrale (29, 34, 39) et le cas échéant pour réfléchir au moins une partie (30, 35) de la zone spectrale (30, 35) non diaphragmée présentent des moyens supplémentaires pour diaphragmer des lignes spectrales, en particulier des pièges de lumière.

13. Dispositif selon la revendication 12,
**caractérisé par le fait que** les moyens pour diaphragmer des lignes spectrales sont réalisés sous forme de zones non réfléchissantes ou respectivement de zones absorbant la lumière et en tant que parties constitutives d'une seule pièce des moyens pour diaphragmer et le cas échéant réfléchir.

14. Dispositif selon la revendication 13,
**caractérisé par le fait que** les zones non réfléchissantes sont modifiables dans leur position et/ou position angulaire.

15. Dispositif selon la revendication 14,
**caractérisé par le fait que** la modification a lieu de manière continue, de préférence par l'intermédiaire d'un entraînement à moteur.

16. Dispositif selon l'une des revendications 1 à 15,
**caractérisé par le fait que** des moyens pour la réduction de lumière diffusée sont disposés dans les différentes marches des rayons des zones spectrales (29, 34, 39 ou respectivement 30, 35) diaphragmées et/ou réfléchies.

17. Dispositif selon l'une des revendications 1 à 16,
**caractérisé par le fait que** les moyens (27) pour la décomposition spectrale du rayon lumineux (14) et les moyens (28, 33, 38) pour diaphragmer une zone spectrale (29, 34, 39) et le cas échéant pour réfléchir au moins une partie (30, 35) de la zone spectrale non diaphragmée sont modifiables dans leur position angulaire et/ou position les uns par rapport aux autres.

18. Dispositif selon l'une des revendications 1 à 17,
**caractérisé par le fait que** les divers moyens (28, 33, 38) pour diaphragmer une zone spectrale (29, 34, 39) et le cas échéant pour réfléchir au moins une partie (30, 35) de la zone spectrale non diaphragmée sont modifiables dans leur position angulaire et/où position les uns par rapport aux autres.

19. Dispositif selon l'une des revendications 1 à 18,
**caractérisé par le fait que** les détecteurs (31, 32, 36) sont modifiables dans leur position angulaire et/ou position les uns par rapport aux autres dans leur position relative aux moyens (28, 33, 38) pour diaphragmer une zone spectrale (29, 34, 39) et le cas échéant pour réfléchir au moins une partie (30, 35) de la zone spectrale non diaphragmée.

20. Dispositif selon l'une des revendications 17 à 19,
**caractérisé par le fait que** la modification a lieu de manière continue, de préférence par l'intermédiaire d'un entraînement à moteur.

21. Dispositif selon l'une des revendications 1 à 20,
**caractérisé par** l'utilisation d'un microscope à fluorescence (1) à foyer commun dans la marche des rayons.
